(19)

Europäisches
Patentamt
European
Patent Office
Office européen
des brevets

(11)   **EP 4 239 024 A2**

(12)   **EUROPEAN PATENT APPLICATION**

(43) Date of publication:
06.09.2023   Bulletin 2023/36

(21) Application number: 23159476.3

(22) Date of filing: 01.03.2023

(51) International Patent Classification (IPC):
**C08L 23/06** (2006.01)      **C08F 297/02** (2006.01)
**C08F 236/04** (2006.01)

(52) Cooperative Patent Classification (CPC):
(C-Sets available)
**C08L 23/06; C08F 236/04; C08F 297/02;**
C08L 2207/20      (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  03.03.2022  US 202263268822 P

(71) Applicant: **Kraton Polymers Nederland B.V.
1322 CE Almere (NL)**

(72) Inventors:
• **TIAN, Jason
  Houston, Texas 77084 (US)**
• **MHETAR, Vijay
  Houston,Texas 77084 (US)**
• **DING, Ruidong
  Houston, Texas 77084 (US)**

(74) Representative: **Henkel & Partner mbB
Patentanwaltskanzlei, Rechtsanwaltskanzlei
Maximiliansplatz 21
80333 München (DE)**

(54)   **COMPOSITIONS BASED ON MULTI-BLOCK POLYOLEFIN COPOLYMERS**

(57)    A multi-block polyolefin copolymer (MBPC) is disclosed comprising: i) a combination of a semicrystalline polymer block and an amorphous polymer block, or ii) at least two amorphous polymer blocks, or iii) at least two semicrystalline polymer blocks. The semicrystalline polymer blocks A and C are independently derived from 1,3-butadiene monomer with 80 to 97 wt.% of 1,4 addition, based on weight of the polymerized 1,3-butadiene monomer in each block A and C. The amorphous polymer block B is derived from at least one monomer selected from isoprene monomer, 1,3-butadiene monomer with 21 to 85 wt.% incorporation by 1,2 addition, and mixtures thereof. The MBPC can be used as a compatibilizer for compatibilization of blends of two or more polyolefins different from each other. Such polyolefin blends provide improved mechanical properties and processability for producing various articles.

EP 4 239 024 A2

**(Cont. next page)**

(52)  Cooperative Patent Classification (CPC): (Cont.)

C-Sets
**C08L 23/06, C08L 23/12, C08L 53/00**

## Description

### TECHNICAL FIELD

The disclosure relates to a multi-block polyolefin copolymer (MBPC) composition and applications thereof.

### BACKGROUND

Polyethylene (PE) and polypropylene (PP) polymers are produced and used abundantly worldwide. Compositions of PE and PP, independently, have their own specific application area, e.g., packaging, transportations, electronics, household items, etc. However, when PE and PP blended / combined, are incompatible with each other and results in phase separation, which leads to poor mechanical properties. Combining PE and PP polymers to obtain homogenous blends is challenging due to their incompatibility. Additionally, challenges of blending recycled PE and PP polymers are similar or more complex than mixing virgin PE and PP. Some of the parameters which make PE and PP difficult to blend include differences in molecular weights, polydispersity indices, melt and crystallization behavior, etc.

PE and PP can be compatibilized using known compatibilizers, e.g., ethylene propylene rubber (EPR), ethylene propylene diene monomer (EPDM) rubber, etc. However, such type of compatibilizers are not effective and can lead to interpenetrating structures with PE and / or PP or phase separate. Moreover, higher amounts of compatibilizers are required to compatibilize blends of PE and PP, and still not able to achieve desired mechanical properties.

Thus, there is a need of a multi-block polyolefin copolymer which can be used as a compatibilizer for effective compatibilization of blends of two or more polyolefins. The compatibilizer enhances mechanical properties and processability of such blends.

### SUMMARY

In a first aspect, the disclosure relates to a multi-block polyolefin copolymer represented by at least one formula selected from: $(A)_p(B)_q(C)_{r1}(B)_{q1}(A)_{p1}$ (1), $[(A)_p(B)_q(C)_{r1}]_nX$ (2), $(B)_q(B)_{q2}(B)_q$ (3), $[(B)_q(B)_{q2}(B)_q]_nX$ (4), $(A)_p(C)_r(A)_p$ (5), and $[(A)_p(C)_r(A)_p]_nX$ (6). Each p, q, q2 and r, independently is $\geq$ 1. Each p1, q1 and r1, independently is $\geq$ 0. n is ranging from 2 to 10, and X is a residue of a coupling agent. Each block A and C is a semicrystalline polymer block, same or different from each other, and independently derived from 1,3-butadiene monomer with 80 to 97 wt.% incorporation by 1,4 addition, based on weight of the polymerized 1,3-butadiene monomer in each block A and C. Each block B is an amorphous polymer block derived from at least one monomer selected from isoprene monomer, 1,3-butadiene monomer with 21 to 85 wt.% incorporation by 1,2 addition, and mixtures thereof.

In a second aspect, the multi-block polyolefin copolymer has a molecular weight ($M_p$) of 15 to 200 kg/mol and a polydispersity index (PDI) of 1.0 to 3.

In a third aspect, the multi-block polyolefin copolymer has an entanglement molecular weight ($M_e$) of 15 to 200 kg/mol.

In a fourth aspect, the multi-block polyolefin copolymer is represented by a formula selected from $(A)_p(B)_q(C)_{r1}(B)_{q1}(A)_{p1}$ (1) and $[(A)_p(B)_q(C)_{r1}]_nX$ (2). A weight ratio of the semicrystalline blocks A and C to the amorphous block B ranges from 1:4 to 4:1.

### DETAILED DESCRIPTION

The following terms will be used throughout the specification.

"Selected from [a group such as A, B, and C]" or "any of [a group such as A, B, and C]" means a single member from the group, more than one member from the group, or a combination of members from the group. For example, "selected from A, B, and C" includes, for example, A only, B only, or C only, as well as A and B, A and C, B and C, or all of A, B, and C.

"At least one of X, Y, and Z" means a single member, "X" only or "Y" only or "Z" only, or more than one member from the group, e.g., "X" and "Y," "X, Y, and Z," etc.

"Compatibilizer" refers to a macromolecular (or a polymer) species exhibiting interfacial activities in polymer blends. Usually, chains of the compatibilizer have blocky structures, with one constitutive block miscible with one blend component and a second block miscible with the other blend component. The compatibilizer can be reactive and link with polymers or non-reactive and only miscible (no link) with polymers.

"Vinyl content" refers to the content of a conjugated diene that is polymerized via 1,2-addition in case of 1,3-butadiene, or via 3,4-addition in case of isoprene, resulting in a monosubstituted olefin, or vinyl group, adjacent to the polymer backbone. Vinyl content can be measured by nuclear magnetic resonance spectrometry (NMR).

"Molecular weight" or Mw refers to the styrene equivalent molecular weight in kg/mol of a polymer block or a block copolymer. Mw can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. Mw of polymers measured using GPC so calibrated are styrene equivalent molecular weights or apparent molecular weights. Mw expressed herein is measured at the peak of the GPC trace and are commonly referred to as styrene equivalent "peak molecular weight," designated as $M_p$.

"Entanglement Molecular Weight" or $M_e$ can be calculated by using a rotary rheometer, a storage elastic modulus and a loss elastic modulus of each sample were measured under conditions of a temperature of 150°C to 230°C, an angular frequency of 0.05 to 500 rad/s, and a strain of 0.5%. From these values, a plateau elastic modulus ($G_N^O$) is obtained, which is defined as the molecular weight between adjacent temporary entanglement points. $M_e$ is calculated according to theoretical equation (A) below:

$$Me = (pRT)/G_N^O \qquad \text{(I).}$$

p is density (kg/m$^3$), R is gas constant (8.3 14 Pa·m$^3$/mol·K), and T is absolute temperature (°K).

"Polydispersity index" or PDI refers to a ratio of a weight average molecular weight ($M_w$) to a number average molecular weight ($M_n$), sometimes also called as molecular weight distribution. PDI is used to indicate distribution of polymer chain molecular weights in a given polymer.

"Blend" or "polymer blend" refers to a composition of two or more polymers. A blend can be miscible or immiscible, has a one or more phases or phase separated.

"Semicrystalline" refers to a polymer or polymer block that possesses a first order transition or crystalline melting point ($T_m$) as determined by differential scanning calorimetry (DSC), according to ASTM F2625. The term semicrystalline can be used interchangeably with the term "crystalline".

"Amorphous" refers to a polymer or polymer block lacking a crystalline melting point as determined by differential scanning calorimetry (DSC), according to ASTM F2625.

"Multimodal" or "bimodal" refers to the modality of the polymer, i.e., the form of its molecular weight distribution curve, which is the graph of the molecular weight fraction as a function of its molecular weight, and / or the form of its comonomer content distribution curve, which is the graph of the comonomer content as a function of the molecular weight of the polymer fractions.

The disclosure relates to a multi-block polyolefin copolymer (MBPC) having: i) a combination of at least a semicrystalline polymer block and at least an amorphous polymer block, or ii) at least two amorphous polymer blocks, or ii) at least two semicrystalline polymer blocks. The MBPC can be used as a compatibilizer for compatibilization of blends of two or more polyolefins different from each other. Such polyolefin blends are characterized as having improved mechanical properties and processability to make it suitable for use in various applications.

(Multi-block Polyolefin Copolymer (MBPC))

In embodiments, MBPC contains any of a semicrystalline polymer block, an amorphous polymer block, or combinations thereof, having a formula selected from (1) to (6):

$$(A)_p(B)_q(C)_{r1}(B)_{q1}(A)_{p1} \qquad (1)$$

$$[(A)_p(B)_q(C)_{r1}]_nX \qquad (2)$$

$$(B)_q(B)_{q2}(B)_q \qquad (3)$$

$$[(B)_q(B)_{q2}(B)_q]_nX \qquad (4)$$

$$(A)_p(C)_r(A)_p \qquad (5)$$

$$[(A)_p(C)_r(A)_p]_nX \qquad (6)$$

In the above formulae, each p, q, q2 and r independently is $\geq$ 1. Each p1, q1, and r1 independently is $\geq$ 0. n ranges from 2 - 10, or 1 - 8, or 2 - 5, or 2 - 4. X is a residue of a coupling agent. Each block A and C is a semicrystalline polymer block, same or different from each other, and independently derived from a 1,3-butadiene monomer. Each block B is an amorphous polymer block and derived from at least a monomer selected from 1,3-butadiene, isoprene, and mixtures thereof. 1,3-butadiene monomer is independently incorporated in blocks A, B, and C by 1,4 and 1,2 addition mechanisms.

Blocks A, B, and C are hydrogenated to a hydrogenation level of > 90%, or > 92%, or > 95%, or > 98%, or > 99%, or up to 100%.

In embodiments, MBPC of formulae (1) and (2) above contain multiple blocks A, B, and C in any order, as shown in formulae (7) to (20b) below. In the formulae, LLDPE-A is semicrystalline linear low density polyethylene block A, LLDPE-C is semicrystalline linear low density polyethylene block C, EPR-B is ethylene-propylene rubber block B, and EBR-B is ethylene-1-butene copolymer block B.

$$(LLDPE\text{-}A)_p(EBR\text{-}B)_q(LLDPE\text{-}C)_r(EBR\text{-}B)_{q1}(LLDPE\text{-}A)_{p1} \qquad (7)$$

$$(EBR\text{-}B)_q(LLDPE\text{-}A)_p(EBR\text{-}B)_q(LLDPE\text{-}A)_{p1}(EBR\text{-}B)_{q1} \qquad (7a)$$

$$(EBR\text{-}B)_q(LLDPE\text{-}C)_r(EBR\text{-}B)_q(LLDPE\text{-}C)_{r1}(EBR\text{-}B)_{q1} \qquad (7b)$$

$$(LLDPE\text{-}A)_p(EPR\text{-}B)_q(LLDPE\text{-}C)_r(EPR\text{-}B)_{q1}(LLDPE\text{-}C)_{r1} \qquad (8)$$

$$(EPR\text{-}B)_q(LLDPE\text{-}A)_p(EPR\text{-}B)_q(LLDPE\text{-}A)_{p1}(EPR\text{-}B)_{q1} \qquad (8a)$$

$$(EPR\text{-}B)_q(LLDPE\text{-}A)_p(EPR\text{-}B)_q(LLDPE\text{-}A)_{p1}(EPR\text{-}B)_{q1} \qquad (8b)$$

$$[(LLDPE\text{-}A)_p(EBR\text{-}B)_q(LLDPE\text{-}C)_{r1}]_nX \qquad (9)$$

$$[(EBR\text{-}B)_q(LLDPE\text{-}A)_p(EBR\text{-}B)_{q1}]_nX \qquad (9a)$$

$$[(EBR\text{-}B)_q(LLDPE\text{-}C)_r(EBR\text{-}B)_{q1}]_nX \qquad (9b)$$

$$[(LLDPE\text{-}A)_p(EPR\text{-}B)_q(LLDPE\text{-}C)_{r1}]_nX \qquad (10)$$

$$[(EPR\text{-}B)_q(LLDPE\text{-}A)_p(EPR\text{-}B)_{q1}]_nX \qquad (10a)$$

$$[(EPR\text{-}B)_q(LLDPE\text{-}C)_r(EPR\text{-}B)_{q1}]_nX \qquad (10b)$$

$$[(LLDPE\text{-}A)_p(EBR\text{-}B)_q(LLDPE\text{-}C)_r(EBR\text{-}B)_q]_nX \qquad (11)$$

$$[(EBR\text{-}B)_q(LLDPE\text{-}A)_p(EBR\text{-}B)_q(LLDPE\text{-}A)_p]_nX \qquad (11a)$$

$$[(EBR\text{-}B)_q(LLDPE\text{-}C)_r(EBR\text{-}B)_q(LLDPE\text{-}C)_r]_nX \qquad (11b)$$

$$[(LLDPE\text{-}A)_p(EPR\text{-}B)_q(LLDPE\text{-}C)_r(EPR\text{-}B)_q]_nX \qquad (12)$$

$$[(EPR\text{-}B)_q(LLDPE\text{-}A)_p(EPR\text{-}B)_q(LLDPE\text{-}A)_p]_nX \qquad (12a)$$

$$[(EPR\text{-}B)_q(LLDPE\text{-}C)_r(EPR\text{-}B)_q(LLDPE\text{-}C)_r]_nX \qquad (12b)$$

$$(LLDPE\text{-}A)p(EBR\text{-}B)q(LLDPE\text{-}C)r(EBR\text{-}B)q \qquad (13)$$

$$(EBR\text{-}B)_q(LLDPE\text{-}A)_p(EBR\text{-}B)_q(LLDPE\text{-}A)_p \qquad (13a)$$

$$(EBR\text{-}B)_q(LLDPE\text{-}C)_r(EBR\text{-}B)_q(LLDPE\text{-}C)_r \qquad (13b)$$

$$(LLDPE\text{-}A)_p(EPR\text{-}B)_q(LLDPE\text{-}C)_r(EPR\text{-}B)_q \qquad (14)$$

$$(EPR\text{-}B)_q(LLDPE\text{-}A)_p(EPR\text{-}B)_q(LLDPE\text{-}A)_p \qquad (14a)$$

$$(EPR\text{-}B)_q(LLDPE\text{-}C)_r(EPR\text{-}B)_q(LLDPE\text{-}C)_r \qquad (14b)$$

$$(LLDPE\text{-}A)_p(EBR\text{-}B)_q(LLDPE\text{-}C)_r(EBR\text{-}B)_q(LLDPE\text{-}A)_p \qquad (15)$$

$$(EBR\text{-}B)_q(LLDPE\text{-}A)_p(EBR\text{-}B)_q(LLDPE\text{-}A)_p(EBR\text{-}B)_q \qquad (15a)$$

$$(EBR\text{-}B)_q(LLDPE\text{-}C)_r(EBR\text{-}B)_q(LLDPE\text{-}C)_r(EBR\text{-}B)_q \qquad (15b)$$

$$(LLDPE\text{-}A)_p(EPR\text{-}B)_q(LLDPE\text{-}C)_r(EPR\text{-}B)_q(LLDPE\text{-}A)_p \qquad (16)$$

$$(EPR\text{-}B)_q(LLDPE\text{-}A)_p(EPR\text{-}B)_q(LLDPE\text{-}A)_p(EPR\text{-}B)_q \qquad (16a)$$

$$(EPR\text{-}B)_q(LLDPE\text{-}C)_r(EPR\text{-}B)_q(LLDPE\text{-}C)_r(EPR\text{-}B)_q \qquad (16b)$$

$$(LLDPE\text{-}A)_p(EBR\text{-}B)_q(LLDPE\text{-}C)_r(EBR\text{-}B)_q(LLDPE\text{-}A)_p(EBR\text{-}B)_q \qquad (17)$$

$$(EBR\text{-}B)_q(LLDPE\text{-}A)_p(EBR\text{-}B)_q(LLDPE\text{-}A)_p(EBR\text{-}B)_q(LLDPE\text{-}A)_p \qquad (17a)$$

$$(EBR\text{-}B)_q(LLDPE\text{-}C)_r(EBR\text{-}B)_q(LLDPE\text{-}C)_r(EBR\text{-}B)_q(LLDPE\text{-}C)_r \qquad (17b)$$

$$(LLDPE\text{-}A)_p(EPR\text{-}B)_q(LLDPE\text{-}C)_r(EPR\text{-}B)_q(LLDPE\text{-}A)_p(EPR\text{-}B)_q \qquad (18)$$

$$(EPR\text{-}B)_q(LLDPE\text{-}A)_p(EPR\text{-}B)_q(LLDPE\text{-}A)_p(EPR\text{-}B)_q(LLDPE\text{-}A)_p \qquad (18a)$$

$$(EPR\text{-}B)_q(LLDPE\text{-}C)_r(EPR\text{-}B)_q(LLDPE\text{-}C)_r(EPR\text{-}B)_q(LLDPE\text{-}C)_r \qquad (18b)$$

$$(LLDPE\text{-}A)_p(EBR\text{-}B)_q(LLDPE\text{-}C)_r(EBR\text{-}B)_q(LLDPE\text{-}A)_p(EBR\text{-}B)_q(LLDPE\text{-}C)_r(EBR\text{-}B)_q \qquad (19)$$

$$(EBR\text{-}B)_q(LLDPE\text{-}A)_p(EBR\text{-}B)_q(LLDPE\text{-}A)_p(EBR\text{-}B)_q(LLDPE\text{-}A)_p(EBR\text{-}B)_q(LLDPE\text{-}A)_p \qquad (19a)$$

$$(EBR\text{-}B)_q(LLDPE\text{-}C)_r(EBR\text{-}B)_q(LLDPE\text{-}C)_r(EBR\text{-}B)_q(LLDPE\text{-}C)_r(EBR\text{-}B)_q(LLDPE\text{-}C)_r \qquad (19b)$$

$$(LLDPE\text{-}A)_p(EPR\text{-}B)_q(LLDPE\text{-}C)_r(EPR\text{-}B)_q(LLDPE\text{-}A)_p(EPR\text{-}B)_q(LLDPE\text{-}C)_r(EPR\text{-}B)_q \qquad (20)$$

$$(EPR\text{-}B)_q(LLDPE\text{-}A)_p(EPR\text{-}B)_q(LLDPE\text{-}A)_p(EPR\text{-}B)_q(LLDPE\text{-}A)_p(EPR\text{-}B)_q(LLDPE\text{-}A)_p \qquad (20a)$$

$$(EPR\text{-}B)_q(LLDPE\text{-}C)_r(EPR\text{-}B)_q(LLDPE\text{-}C)_r(EPR\text{-}B)_q(LLDPE\text{-}C)_r(EPR\text{-}B)_q(LLDPE\text{-}C)_r \qquad (20b)$$

In the above formulae, each p, q, and r each independently is $\geq 1$. Each p1, q1 and r1 independently is $\geq 0$. n ranges from 2 - 10, or 1 - 8, or 2 - 5, or 2 - 4. X is a residue of a coupling agent.

In embodiments, MBPC contains more than one amorphous polymer blocks, having at least a formula selected from (21) - (32) below, with EPR-B as ethylene-propylene rubber block B, and EBR-B as ethylene-1-butene copolymer block B.

$$(EBR\text{-}B)_q(EPR\text{-}B)_{q2}(EBR\text{-}B)_q \qquad (21)$$

$$(EPR\text{-}B)_{q2}(EBR\text{-}B)_q(EPR\text{-}B)_{q2} \qquad (22)$$

$$(EBR\text{-}B)_q(EPR\text{-}B)_{q2}(EBR\text{-}B)_q(EPR\text{-}B)_{q2} \qquad (23)$$

$$(EPR\text{-}B)_{q2}(EBR\text{-}B)_q(EPR\text{-}B)_{q2}(EBR\text{-}B)_q \qquad (24)$$

$$(EBR\text{-}B)_q(EPR\text{-}B)_{q2}(EBR\text{-}B)_q(EPR\text{-}B)_{q2}(EBR\text{-}B)_q \qquad (25)$$

$$(EPR\text{-}B)_{q2}(EBR\text{-}B)_q(EPR\text{-}B)_{q2}(EBR\text{-}B)_q(EPR\text{-}B)_{q2} \qquad (26)$$

$$[(EBR\text{-}B)_q(EPR\text{-}B)_{q2}(EBR\text{-}B)_q]_nX \qquad (27)$$

6

$$[(EPR\text{-}B)_{q2}(EBR\text{-}B)_q(EPR\text{-}B)_{q2}]_nX \qquad (28)$$

$$[(EBR\text{-}B)_q(EPR\text{-}B)_{q2}(EBR\text{-}B)_q(EPR\text{-}B)_{q2}]_nX \qquad (29)$$

$$[EPR\text{-}B)_{q2}(EBR\text{-}B)_q(EPR\text{-}B)_{q2}(EBR\text{-}B)_q]_nX \qquad (30)$$

$$[(EBR\text{-}B)_q(EPR\text{-}B)_{q2}(EBR\text{-}B)_q(EPR\text{-}B)_{q2}(EBR\text{-}B)_q]_nX \qquad (31)$$

$$[(EPR\text{-}B)_{q2}(EBR\text{-}B)_q(EPR\text{-}B)_{q2}(EBR\text{-}B)_q(EPR\text{-}B)_{q2}]_nX \qquad (32)$$

In above formulae, q and q2 each independently is $\geq$ 1. n ranges from 2 - 10, or 1 - 8, or 2 - 5, or 2 - 4. X is a residue of a coupling agent.

In embodiments, MBPC contains more than one semicrystalline polymer blocks, consisting essentially of blocks A and C with different crystallinity percentages, e.g., 10 - 70%, having at least a formula selected from (33) to (44).

$$(LLDPE\text{-}A)_p(LLDPE\text{-}C)_r(LLDPE\text{-}A)_p \qquad (33)$$
$$(LLDPE\text{-}C)_r(LLDPE\text{-}A)_p(LLDPE\text{-}C)_r \qquad (34)$$
$$(LLDPE\text{-}A)_p(LLDPE\text{-}C)_r(LLDPE\text{-}A)_p(LLDPE\text{-}C)_r \qquad (35)$$
$$(LLDPE\text{-}C)_r(LLDPE\text{-}A)_p(LLDPE\text{-}C)_r(LLDPE\text{-}A)_p \qquad (36)$$
$$(LLDPE\text{-}A)_p(LLDPE\text{-}C)_r(LLDPE\text{-}A)_p(LLDPE\text{-}C)_r(LLDPE\text{-}A)_p \qquad (37)$$
$$(LLDPE\text{-}C)_r(LLDPE\text{-}A)_p(LLDPE\text{-}C)_r(LLDPE\text{-}A)_p(LLDPE\text{-}C)_r \qquad (38)$$
$$[(LLDPE\text{-}A)_p(LLDPE\text{-}C)_r(LLDPE\text{-}A)_p]_nX \qquad (39)$$
$$[(LLDPE\text{-}C)_r(LLDPE\text{-}A)_p(LLDPE\text{-}C)_r]_nX \qquad (40)$$
$$[(LLDPE\text{-}A)_p(LLDPE\text{-}C)_r(LLDPE\text{-}A)_p(LLDPE\text{-}C)_r]_nX \qquad (41)$$
$$[(LLDPE\text{-}C)_r(LLDPE\text{-}A)_p(LLDPE\text{-}C)_r(LLDPE\text{-}A)_p]_nX \qquad (42)$$
$$[(LLDPE\text{-}A)_p(LLDPE\text{-}C)_r(LLDPE\text{-}A)_p(LLDPE\text{-}C)_r(LLDPE\text{-}A)_p]_nX \qquad (43)$$
$$[(LLDPE\text{-}C)_r(LLDPE\text{-}A)_p(LLDPE\text{-}C)_r(LLDPE\text{-}A)_p(LLDPE\text{-}C)_r]_nX \qquad (44)$$

In the above formulae, each p and r each independently is $\geq$ 1. n ranges from 2 - 10, or 1 - 8, or 2 - 5, or 2 - 4. X is a residue of a coupling agent.

In embodiments, 1,3-butadiene monomer is independently incorporated in blocks A and C by 1,4 addition in an amount of 80 - 97, or 82 - 95, 85 - 95, or 90 - 97, or > 90, or > 92 wt.%, based on weight of the polymerized 1,3-butadiene monomer in each block A and C, with the remainder being 1,2 addition. Conversely in embodiments, 1,3-butadiene monomer is independently incorporated in blocks A and C by 1,2 addition in an amount of 3 - 20, 5 - 15, or 7 - 12, or < 20, or < 15, or < 10 wt.%, based on weight of the polymerized 1,3-butadiene monomer in each block A and C.

In embodiments, each block A and C independently has a vinyl content, before hydrogenation, of 5 - 15, or 7 - 14, or 8 - 12 mol%, based on mol of each block A and C.

In embodiments, blocks A and C having 1,4 addition of the polymerized 1,3-butadiene monomer provide a cis-configuration in an amount of 30 - 60, or 35 - 55, or > 30, or > 40 wt.%, based on the polymerized 1,3-butadiene monomer in each block A and C. In embodiments blocks A and C having 1,4 addition of the polymerized 1,3-butadiene monomer in the polymer chain, provides a trans-configuration in an amount of 40 - 70, or 45 - 65, or > 40, or > 50 wt.%, based on the polymerized 1,3-butadiene monomer in each block A and C.

In embodiments, blocks A and C containing the polymerized 1,3-butadiene monomer incorporated by 1,4 addition (e.g., 80 - 97 wt.%) and remainder 1,2 addition (e.g., 3 - 20 wt.%), results in formation of a polymer block of ethylene and 1-butene units, which after hydrogenation provides a semicrystalline linear low density polyethylene block A (LLDPE-A) and / or a semicrystalline linear low density polyethylene block C (LLDPE-C). Each LLDPE-A and LLDPE-C can have same or different amounts of polymerized 1,3-butadiene monomer incorporated by 1,4 addition.

In embodiments, each block A and C independently has a crystallinity of 20 - 70%, or 30 - 65%, or 40 - 60%, or 45 - 65%, or > 35%, or > 40%, measured by differential scanning calorimetry (DSC), according to ASTM F2625.

In embodiments, block B is derived from 1,3-butadiene monomer incorporated by 1,2 addition in an amount of 21 - 85, or 25 - 80, or 30 - 80, or > 25, or > 30 wt.%, based on total weight of the polymerized 1,3-butadiene monomer in the block B, the remainder being 1,4 addition. Conversely in embodiments, 1,3-butadiene monomer is incorporated in block B by 1,4 addition in an amount of 15 - 79, or 30 - 75, 40 - 79, or 50 - 79% > 40, or > 45 wt.%, based on total weight of the polymerized 1,3-butadiene monomer in the block B.

In embodiments, block B has a vinyl content, before hydrogenation, of 60 - 80, or 65 - 80, or 70 - 80 mol%, based on total mol of the block B.

In embodiments, block B containing the polymerized 1,3-butadiene monomer incorporated by 1,2 addition (e.g., 21 - 85 wt.%) and 1,4 addition (e.g., 15 - 79 wt.%) results in a copolymer block of ethylene and 1-butene units, respectively. Such copolymer unit after hydrogenation provides an amorphous ethylene-1-butene copolymer block B (EBR-B).

In embodiments, block B is derived from isoprene monomer incorporated by 1,4 addition in an amount of 80 - 97, or 85 - 95, 90 - 97, or 88 - 95, or > 88, or > 90 wt.%, based on total weight of the polymerized isoprene monomer in the block B, with the remainder being 3,4 addition. Conversely in embodiments, block B contains the polymerized isoprene monomer incorporated by 3,4 addition in an amount of 3 - 20, 5 - 15, or 7 - 12, or < 20, or < 15, or < 10 wt.%, based on total weight of the polymerized isoprene monomer in the block B.

In embodiments, MBPC further comprises reactive end groups, e.g., alkene or unsaturated, due to the catalyst termination step. The reactive end groups can be same or different for the same MBPC polymer chain.

In embodiments, block B contains polymerized isoprene monomer incorporated by both 1,4 addition and 3,4 addition. Such block is then hydrogenated to obtain an amorphous ethylene-propylene rubber block B (EPR-B) with random distribution of atactic pentene units.

In embodiments, MBPC is a grafted MBPC containing blocks A and / or C as a backbone with block B as a grafted chain or block B as a backbone with blocks A and / or C as grafted chains.

MBPC can be modified to have at least one functional group on at least one block A, B, or C. Examples of functional groups include amino, phosphino, epoxies, anhydrides, silanes, acrylates, hydroxy, carboxylic acids / salts, sulfonic acid, phosphate, phosphine oxide, phosphoric acid, alkoxide, nitrile, thioether, thiol, silicon or boron containing compounds, maleic acid, fumaric acid, itaconic acid, citraconic acid, maleic anhydride, itaconic anhydride, citraconic anhydride, allylsuccinic anhydride, and mixtures thereof.

In embodiments for formulae with blocks A, B, and C, block A constitutes from 35 - 60, or 35 - 55, or 40 - 60, or > 35, or > 45 wt.%, block B constitutes from 35 - 60, or 35 - 55, or 40 - 60, or > 35, or > 45 wt.%, and block C constitutes from 5 - 30, or 10 - 30, or 5 - 25, > 5, or > 10, or > 20 wt.%, based on total weight of the MBPC.

In embodiments for formulae with blocks A, B, and C, the MBPC has a weight ratio of the semicrystalline polymer blocks A and C to the amorphous block from 1:4 to 4:1, 1:3 to 3:1, or 1:2 to 2:1.

In embodiments for formulae with only blocks A and C, block A constitutes from 5 - 95, or 10 - 85, or 20 - 70, or > 30, or > 40 wt.%, and block C constitutes from 5 - 95, or 15 - 90, or 30 - 80, > 30, or > 40 wt.%, based on total weight of the MBPC. In embodiments for formulae with only blocks A and C, a weight ratio of the block A to the block C ranges from 5:95 - 95:5, or 20:80 - 80:20, or 30:70 - 70:30, or 40:60 - 60:40.

In embodiments, the MBPC has a molecular weight ($M_p$) of 15 - 200, or 20 - 150, or 20 - 100, or 15 - 80, or 15 - 80, or 20 - 40 kg/mol, or < 60 kg/mol, or < 50 kg/mol.

In embodiments, each block A, B, and C independently has a molecular weight ($M_p$) of 5 - 80, or 10 - 70, or 15 - 60, or 5 -40 kg/mol.

In embodiments, the MBPC has an entanglement molecular weight ($M_e$) of 15 - 200, or 20 - 150, or 20 - 100, or 15 - 80, or 15 - 80, or 20 - 40 kg/mol, or < 60 kg/mol, or < 50 kg/mol.

In embodiments, each block A, B, and C independently has an entanglement molecular weight ($M_e$) of 5 - 80, or 7 - 70, or 10 - 60, or 5 - 40, or < 45 kg/mol.

In embodiments, the MBPC has a polydispersity index (PDI) of 1.0 - 3, or 1.1 - 2.5, or 1.2 - 2.5, or 1.0 - 2.2, or 1.1 - 2.0, of < 2.0.

In embodiments, the MBPC has a density of 850 - 950, or 855 - 945, or 860 - 940, or 865 - 935, or 870 - 930 kg/m$^3$, measured according to ASTM D1505-85.

(Methods of Preparation of MBPC)

MBPC can be prepared by sequential (or successive) polymerization of the monomers in solution (in solvent) in the presence of an initiator / catalyst, with stepwise addition of monomers and initiator, followed by coupling of the resulting MBPC with a coupling agent, and lastly, a hydrogenation step.

In embodiments, MBPC is prepared by sequential living anionic polymerization in the presence of an initiator / catalyst, followed by coupling of the resulting MBPC with a coupling agent, and lastly, a hydrogenation step.

In embodiments, block A is formed first in the sequential polymerization, in a reaction between one or more polymerization initiators / catalysts, and 1,3-butadiene monomer. The polymerization of 1,3-butadiene is continued to a desired molecular weight with majority of 1,4 addition. After essentially all of 1,3-butadiene monomers are consumed for embodiments with B block, the isoprene monomer (or 1,3-butadiene monomer to have majority of 1,2 addition, in combination with a copolymer modifier) is injected to form block B. The polymerization is continued for isoprene monomers till all monomers are consumed. Thereafter, 1,3-butadiene monomer is added for formation of block C. After formation of the block copolymer with blocks A and / or C, and B, further addition of respective monomers can be continued to obtain desired multiple alternate block copolymer. At this point, the coupling agent can be utilized by injection of the suitable coupling agent to cause formation of the coupled polymers.

In embodiments, MBPC with more than one block B (e.g., formulae 3 and 4) is prepared by conducting polymerization of 1,3-butadiene monomer under conditions known in the art, e.g., at a temperature of < 80, or < 50, or at ambient, or 0 - 35°C, etc., without addition of any modifier to get some units with LLDPE type (by 1,4 addition of 1,3-butadiene). This is to be followed by addition of a modifier, e.g., diethyl ether, in a suitable amount to increase vinyl content (or to lower 1,2 addition of 1,3-butadiene). The polymerization reaction is continued for some time, with modifier being allowed to evaporate. The reaction continues to further polymerize all 1,3-butadiene monomers to obtain the MBPC.

In embodiments, MBPC with more than one block B is prepared by conducting polymerization of 1,3-butadiene to get some units with LLDPE type (by 1,4 addition of 1,3-butadiene) at a temperature of 50°C or lower, 0°C, ambient, etc., and then temperature is increased another 15-30°C to lower the rate of 1,4 addition of 1,3-butadiene (conversely, to increase the rate of 1,2 addition of 1,3-butadiene). Temperature is lowered back again to < 50°C for polymerization to continue. Optionally, coupling agents can be introduced in this step for coupling to take place. Optionally in embodiments, the temperature can be increased another 15-30°C until all 1,3-butadiene monomers are consumed to obtain the MBPC.

Process conditions for the sequential polymerization can be similar to those used for anionic polymerizations, e.g., at a temperature of -30°C to 180°C, or 10°C to 150°C, or 30°C to 120°C. The polymerization reaction is carried out in an inert atmosphere, e.g., nitrogen, or under pressure within the range from about 0.5 to 65 bars, for < 12 hrs., or from 5 minutes to 5 hours, depending on factors including temperature, concentration of monomers, molecular weights of each block, etc.

Polymerization is carried out in the presence of a suitable amount of solvent(s), e.g., ether, benzene, toluene, xylene, ethylbenzene cyclohexane, methylcyclohexane, etc.

After formation of polymer or after coupling (if desired) reaction, the polymerization reaction mixture is optionally treated with a proton donor terminating agent, e.g., water, carbon dioxide, hydrogen, alcohol, phenols, or linear saturated aliphatic mono- or dicarboxylic acids, to react with the polymer initiator prior to hydrogenation.

In embodiments, a modifier is used during the polymerization to control the vinyl content in the polymer to a desired level. The modifier serves to improve the efficiency of incorporation of the comonomers during polymerization. Examples include polar modifiers such as dimethyl ether, diethyl ether, ethyl methyl ether, ethyl propyl ether, etc. and chelating polar modifiers, such as, diethoxy propane (DEP), 1,2-dioxy-ethane (dioxo), 1.2-dimethoxy-ethane, and ortho-dimethoxy-benzene (ODMB), etc. Amounts of the modifier used depends upon the type of the modifier, e.g., 0.5 - 20, or 1 - 15, or 1 - 10 wt.%, based on total weight of monomers to be polymerized.

Examples of catalysts / initiators include organomonoalkali metal compounds "RM," wherein R is an alkyl, cycloalkyl, or aryl radical containing 4 to 8 carbon atoms, such as an n-butyl radical, and M is an alkali metal e.g., alkyl lithium compounds, s-butyllithium, n-butyllithium, t-butyllithium, amyllithium, di-sec-butyl lithium adduct of m-diisopropenyl benzene and the like.

Examples of catalysts can be selected from pyridylamidohafnium, vanadium compounds, organoaluminum compounds, homoleptic rare earth tetramethylaluminates, allyl cobalt phosphine complexes, trichlorobisphosphino vanadium complexes, ansa-neodymocenes, Co and Fe complexes with bis(imino)pyridine ligands, metallocene catalyst with metallocene compound of a transition metal selected from Group 4, transition metal catalyst in the presence or absence of an organozinc compound, e.g., dimethyl zinc, diethyl zinc, dihexyl zinc, diphenyl zinc, dibenzyl zinc compound, and the like.

In embodiments, a co-catalyst is used in combination with the catalyst. The co-catalyst can be selected from but limited to $B(C_6F_5)_3$, organoaluminum, boron compound, $[Z]^+[B(C_6F_5)_4]^-$ ($[Z]^+$ being $[(C_{18}H_{37})_2N(Me)H]^+$, $[C_6H_5N(Me)_2H]^+$, $[Ph_3C]^+$, methyl aluminoxane (MAO), etc.

In embodiments, the initiator / catalyst is used in an amount of 0.002 - 5, or 0.005 - 4.5, or 0.01 - 4, or 0.015 - 3.8, or 0.02 - 3.5 wt.%, based on total weight of monomers to be polymerized.

Examples of the coupling agent can be selected from the group consisting of di-or multivinylarene compounds; di- or multiepoxides; di- or multiisocyanates; di- or multialkoxysilanes; di- or multiimines; di-or multialdehydes; di- or multiketones; alkoxytin compounds; di- or multihalides, e.g., silicon halides and halosilanes; mono-, di-, or multianhydrides; di- or multiesters, e.g., esters of monoalcohols with polycarboxylic acids; diesters which are esters of monohydric alcohols with dicarboxylic acids; diesters which are esters of monobasic acids with polyalcohols, e.g., glycerol; divinyl benzene; dichloroethane; dibromobutane; esters of carboxylic acids; and mixtures thereof.

The coupling agent in embodiments, is based on a silane compound, e.g., vinyl trimethoxy silane, vinyl triethoxy silane, vinyl tripropoxy silane, vinyl tributoxy silane, vinyl ethoxy dimethoxy silane, vinyl ethoxy dipropoxy silane, propenyl ethoxy dimethoxy silane, propenyl ethoxy dipropoxy silane, tetra-methoxysilane (TMOS), tetra-ethoxysilane (TEOS), methyltrimethoxysilane (MTMS), and mixtures thereof.

Examples of polyvinyl compounds based coupling agents include polyepoxides, polyisocyanates, polyamines, polyaldehydes, polyhalides, polyanhydrides, polyketones, polypoxyesters, polyesters, and mixtures thereof. The coupling agent can be based on epoxidized vegetable oils, e.g., epoxidized soybean oil, acrylated epoxidized soybean oil (AESO), epoxidized linseed oil, and mixtures thereof.

In embodiments, the coupling agent is used in amounts of 1 - 15, or 2 - 14, or 3 - 12, or 5 - 10 wt.%, based on total weight of monomers to be polymerized.

In embodiments, a nucleating agent is added to promote crystallization of blocks A and C. Examples of the nucleating agents include malonic acid, halloysite, sorbitol, carboxylate nucleating agent (NTC), boron nitride, calcium carbonate, magnesium carbonate, titanium oxide, phosphoric ester metal salt, glass fibers, pigments, talc, rosin type nucleating agent, benzenesulfonamide metal salts, toluene-4-sulfonamide metal salts, N-phenyl-4-benzenesulfonamide metal salts, N-phenyl-4-methyl-benzenesulfonamide metal salts and 1,2-benzisothiazol-3(2H)-one-1,1-dioxide metal salts, zinc glycerolate, calcium glycerolate, calcium hexahydrophthalate, zinc hexahydrophthlate, and mixtures thereof.

In embodiments, nucleating agent is used in amounts of 0.1 - 5, or 0.2 - 4, or 0.5 - 3, or 1 - 3 wt.%, based on total weight of monomers to be polymerized to form blocks A & C.

In embodiments, after the sequential polymerization, MBPCs are hydrogenated in the presence of a hydrogenation catalyst at a temperature of < 350°C, or < 250°C, or < 100°C, or > 50°C, and at a hydrogen pressure < 1000 psig, or 500-900 psig, or > 450 psig.

The hydrogenation reaction can be conducted in the same solvent as is used for polymerization reaction or a different solvent. In embodiments, the polymer solution obtained from polymerization step is diluted with the solvent prior to hydrogenation, to have weight of the polymer in the solvent of 5 - 50, or 10 - 40, or 5 - 30, or 10 - 35 wt.%, based on total weight of the solution prior to hydrogenation.

In embodiments, the hydrogenation is conducted in substantial absence of a catalyst modifier, until > 90% of the unsaturation is reduced. At this point, a catalyst modifier, e.g., a Lewis base, weak organic acids, alcohols, amines, etc. is added and hydrogenation continued at a temperature of 100 - 200°C, or 175 - 225°C, under hydrogen pressure of 1000 psig, 1100 - 2000 psig, or 1200 - 1800 psig. Upon completion of the hydrogenation step, > 80%, or > 85, or > 90, or > 95, or > 98%, or > 99% of the unsaturation is reduced.

After hydrogenation step, hydrogenation catalyst residues and the modifier can be removed by any of extraction, precipitation, filtration, distillation, or other means. The reaction mixture can be then treated to recover the polymer by flashing off the solvent or coagulating the polymer with steam and / or hot water.

Examples of hydrogenation catalysts include transition metal catalysts, e.g., nickel, cobalt, rhodium, ruthenium, palladium, platinum, other Groups VIIIb (Group 8 - 10) metals, or mixtures thereof. The hydrogenation catalyst can be any of heterogeneous catalyst, supported heterogeneous catalysts, and homogeneous catalyst. In embodiments, the hydrogenation catalyst is prepared by combining a Group VIIIb metal carboxylate or alkoxide with an alkyl or hydride of a metal selected from Groups I-A, II-A, and III-B of the Periodic Table of Elements. In embodiments, the hydrogenation catalyst is formed from a Group 8 - 10 metal compounds, e.g., palladium, nickel, cobalt, aluminum alkyl, and the like. In embodiments, the hydrogenation catalyst is formed by reacting Group VIII metal carboxylic acid salt with other metal alkyls, e.g., Li alkyls including n-butyllithium and sec-butyllithium, or metal hydrides such as lithium hydride and lithium aluminium hydride.

Examples of aluminum alkyl compounds include organo aluminum compounds of formula $R_nAlX_{3-n}$, wherein R is a hydrocarbon group of $C_1$-$C_{10}$ or $C_2$-$C_8$, X is hydrogen or R2, wherein R2 is a hydrocarbon group of $C_1$-$C_{10}$, which is different from R, and n is 1, 2, or 3. In embodiments, the aluminum alkyl compound is trialkylaluminum compound. In embodiments, the aluminum alkyl compound has a molar ratio of aluminum to cobalt of 1:1 to 20:1, or 1:1 to 5:1 or 1:1 to 2:1.

Examples of nickel or cobalt compounds which can be soluble, include nickel carboxylates such as nickel octanoate, nickel stearate, nickel decanoate, nickel acetylacetanoate, nickel naphthenate, nickel octoate; and cobalt carboxylates such as cobalt stearate, cobalt octanoate, and cobalt versatate. In embodiments, the hydrogenation catalyst used is a mixture of cobalt and nickel catalysts, e.g., a cobalt carboxylate with a nickel carboxylate. In embodiments, a cobalt catalyst used, with the amount of cobalt being at least 10%, or 25 - 75%, or at least 50% on a molar basis of the total metal present in the hydrogenation catalyst.

(Properties of MBPC)

In embodiments, MBPC has an intrinsic viscosity of > 2, or > 2.5, or > 3, or 3 - 5, or > 4, or > 7, or 2 - 10, or 3 - 8, or 5 - 9, or < 10 dl/g, measured according to ISO 1628/1 at 135°C.

In embodiments, MBPC has a melt flow rate at 190°C with 16 load of > 2, or > 5, or > 8, or > 10, or 2 - 60, or 5 - 55, or 8 - 50, or 5 - 45 g/10min., measured according to ASTM D1238.

In embodiments, MBPC has a heat deflection temperature (HDT) of > 5°C, or > 10°C, or 5 - 40°C, or 10 - 35°C, or 12 - 30°C, or 15 - 25°C, measured according to ISO 75B.

In embodiments, MBPC has a Charpy Notched impact strength of 5 - 20, 6 - 18, or 7 - 15, or 8 - 15 kJ/m$^2$, measured according to ISO 179-leA at 23°C.

In embodiments, MBPC has a tensile strength of 1 - 10, or 1.5 - 9, or 2 - 8, or 2.5 - 7.5, or 3 - 7 N/mm$^2$, measured according to ASTM D882.

In embodiments, MBPC has an elongation at break of 400 - 1200%, or 450 - 1100%, or 500 - 1000%, or 550 - 900%, or 600 - 850%, measured according to ASTM D882.

In embodiments, MBPC has a flexural modulus of 200 - 700, or 250 - 650, or 300 - 600 MPa, measured at 23°C according to ISO 178.

In embodiments, MBPC has a tensile modulus of 500 - 2000, or 600 - 1800, or 700 - 1700, or 800 - 1600, or 900 - 1500 MPa, measured according to ISO 527-2.

In embodiments, MBPC has a melting temperature ($T_m$) of 80 - 140°C, or 85 - 130°C, or 90 - 125°C, or 100 - 120°C, or 110 - 115°C.

(End-Use Applications)

MBPC can be used in many applications, particularly in applications for compatibilizing blends of different polyolefins which are incompatible with each other. In embodiments, it is used for blending polyethylene (PE) and polypropylene (PP). Polyolefins can be virgin, and / or a post-consumer recycle (PCR), and / or post-industrial recycle (PIR) material.

In embodiments, MBPC is optionally combined with polymers known as compatibilizers for various polyolefin blends. Examples of such other compatibilizers include ethylene-propylene rubbers, copolymers of ethylene and propylene or $C_4$ to $C_{10}$ alpha olefin, multi-block copolymers of isotactic polypropylene (iPP) and polyethylene (PE), multimodal polyethylene copolymers, olefin block copolymers, heterophasic random copolymers comprising a random polypropylene copolymer matrix phase and an elastomer phase, and the like.

PE for use in the blends can be any of low density polyethylene (LDPE), linear low density polyethylene (LLDPE), very low density polyethylene (VLDPE), high density polyethylene (HDPE), medium density polyethylene (MDPE), high molecular weight polyethylene (HMWPE), and ultra-high molecular weight polyethylene (UHMWPE), and mixtures thereof.

PP can be a heterophasic polymer composition comprising a propylene homopolymer matrix (PP1) or random copolymer matrix (PP1) and dispersed therein a propylene copolymer component (PP2) with one or more ethylene or higher alpha-olefin comonomer(s). In embodiments, the random copolymer matrix comprises propylene monomer and at least one comonomer selected from group consisting of ethylene, $C_4$-$C_8$ alpha-olefins, e.g., 1-butene, 1-pentene, 4-methyl-i -pentene, i-hexene, 1 -heptene or 1-octene, and mixtures thereof. In embodiments, the PP is a blend of polypropylene with a random ethylene and / or butene copolymer of polypropylene, or a crystalline random copolymer of ethylene and propylene combined with a rubbery copolymer of ethylene-propylene. Copolymers of polypropylene can be used, including copolymers of propylene with copolymerizable comonomers, e.g., ethylene, 1-butene, 1-pentene, 1-hexene, 1-octene, or one or more conjugated or non-conjugated dienes.

In embodiments, the polyolefin blend further comprises at least an additive in amounts of 0 - 10, or 0.5 - 8, or 1 - 5, or > 1, or < 10 wt.%, based on total weight of the blend. Examples of additives include activators, curing agents, stabilizers, thickeners, coalescing agents, slip agents, release agents, antimicrobial agents, surfactants, antioxidants, antiozonants, color change pH indicators, plasticizers, tackifiers, film forming additives, dyes, pigments, UV stabilizers, UV absorbers, catalysts, fillers, other resins, flame retardants, viscosity modifiers, wetting agents, deaerators, toughening agents, adhesion promoters, heat stabilizers, lubricants, flow modifiers, drip retardants, antistatic agents, processing aids, stress-relief additives, blowing agents, foam nucleating agents, weld line strength promoter, and mixtures thereof.

The MPBC is selected according to amounts of PE and / or PP in the polyolefin blend, whether the polyolefin is virgin or recycled, the amounts of each, and / or the crystallinity of PE / PP employed, and other compatibilizers if any. In embodiments, polyethylene has a crystallinity of 20 - 70%, or 25 - 65%, or 30 - 60%, or 35 - 55%, or > 35%, or > 40%, or > 50%, measured by differential scanning calorimetry (DSC), according to ASTM F2625. In embodiments, polypropylene has a crystallinity of 20 - 70%, or 25 - 65%, or 30 - 60%, or 35 - 55%, or > 35%, or > 40%, or > 50%, measured by differential scanning calorimetry (DSC), according to ASTM F2625.

Depending on the end-use applications, the sources of polyolefins, and amount of polyolefins used, in embodiment, the polyolefin blend contains 0.2 - 20, or 0.5 - 15, or 1 - 10, or 1 - 15, or 2 - 12 wt.% of MBPC, based on total weight of the polyolefin blend. In embodiments, a polyolefin blend contains: (a) 40 - 98.8 wt.% of polyethylene (virgin or PCR); (b) 1 - 40 wt.% of polypropylene (virgin or PCR); (c) 0.2 - 20 wt.% of MBPC; and (d) up to 10 wt.% of at least an additive; alternatively, (a) 55 - 89.5 or 75 - 84.5 wt.% of polyethylene (virgin or PCR), (b) 10 - 30 or 15 - 30 wt.% of polypropylene (virgin or PCR), (c) 0.5 - 15, or 1 - 10 wt.% of MBPC, and (d) 0 - 10 wt.% of at least an additives, based on total weight of the polyolefin blend.

In embodiments, the polyolefin blend comprises 0.2 - 15, or 0.5 - 10, or 1 - 10, or 0.5 - 5, or 1 - 5 wt.% of MBPC and rest is a combination of polyethylene and polypropylene in a weight of 1:10 to 10:1, or 1:8 to 8:1, or 1:5 to 5:1, based on total weight of the polyolefin blend.

The polyolefin blend can be prepared by mixing all the components in any order, or simultaneously, by standard process and equipment known in the art, e.g., dry blending, compounding, etc., prior to forming the end-use articles / applications. Articles can be made by any of injection blow molding, injection molding, extrusion blow molding, coextrusion molding, cast film extrusion, blown film extrusion, injection stretch blow molding, rotational molding, thermoforming, thermofusion, foam blow molding, pultrusion, calendaring, additive manufacturing, or other known processing methods.

Examples of articles made from the polyolefin composition include bottles, containers, fuel tanks, drums, etc. Other molded articles include furniture, signage, wheels, toys, gardening products, and the like. Polyolefin blends can be used in many applications, e.g., include piping, packaging applications, for automotive articles, films, geo-membranes, roofing applications, pond liners, caps, and closures as well as core layers of a multilayer polyolefin sheet or film, containers, household articles, bottles, caps, insulating layer in power cables, etc.

(Properties of Polyolefin Blends)

The polyolefin blend containing the MBPC shows improved mechanical properties, processability, and better thermal properties, compared to blends without the MBPC.

In embodiments, the polyolefin blend has a Notched Izod impact strength at 23°C of 80 - 200, 90 - 180, 100 - 170, or 110 - 160, or 120 - 150, or 125 - 145 J/m$^2$, measured according to ASTM D256.

In embodiments, the polyolefin blend has an electrical conductivity of < 40, or < 35, or < 30, or < 25, or 0.1 - 30, or 1 - 25 fS/m, measured at 30 kV/mm according to ASTM D5391.

In embodiments, the polyolefin blend has a flexural modulus of 0.3 - 1.8, or 0.35 - 1.7, or 0.4 - 1.6, or 0.5 - 1.5, or 0.6 - 1.4, or 0.7 - 1.3 GPa, measured according to ASTM D790.

In embodiments, the polyolefin blend has an impact strength of 10 - 100, or 15 - 90, or 20 - 80, or 25 - 70, or 30 - 65 kJ/m$^2$, measured according to ISO 8256 method A on an Instron CAEST 9050 impact pendulum equipped with 2 J hammer and 15 g of a cross head mass.

In embodiments, the polyolefin blend has a tensile strength of 15 - 40, or 16 - 38, or 17 - 35, or 18 - 32, or 20 - 30, or 21 - 29 MPa, measured according to ASTM D638.

In embodiments, the polyolefin blend has an elongation at break at 50 mm / min) of > 300%, or > 350%, or > 400%, or > 430%, or > 450%, or > 480%, or > 500%, or > 520%, or > 550%, or 580%, or 600%, measured according to ASTM D638.

In embodiments, the polyolefin blend has a hardness Shore D of 40 - 80, or 45 - 75, or 50 - 70, or 55 - 65, measured according to ASTM D2240.

In embodiments, the polyolefin blend has a Vicat softening point (10N) of 80 - 150°C, or 85 - 145°C, or 90 - 140°C, or 95 - 135°C, or 100 - 130°C, measured according to ASTM D1525.

In embodiments, the polyolefin blend has a heat deflection temperature of 40 - 90°C, or 45 - 85°C, or 50 - 80°C, or 55 - 75°C, measured according to ASTM D648.

In embodiments, the polyolefin blend has a melt flow rate (MFR) at 190°C with 16 Kg load of 0.1 - 40, or 1 - 30, or 2 - 25 g/10min., measured according to ASTM D1238.

In embodiments, the polyolefin blend has a melt strength, measured as the plateau force (cN) at 190°C of > 2, or > 3, or > 4, or > 5, or > 7, or > 10, or > 15, or 1 - 40, or 5 - 30, or 8-25 cN, according to ISO 16790.

In embodiments, the polyolefin blend has a storage modulus (G') < 10, or < 9, or < 8, or < 7, or < 6, or < 5, or < 4$^{-1}$s$^{-1}$, measured by dynamic mechanical analysis (DMA).

In embodiments, the polyolefin blend has a stress relaxation G (t, $\gamma$) under shear strain at 230°C of 0.2 - 5, or 0.3 - 4.8, or 0.4 - 4.5, or 0.5 - 4, or 0.8 - 3.5.

In embodiments, the polyolefin blend has an environmental stress cracking resistance (ESCR), measured according to ASTM D 1693 of > 10 hours to 50% failure, or > 12 hours, or > 15 hours, or > 20 hours, or > 30 hours, or > 40 hours, or > 50 hours to 50% failure.

(Examples)

The following examples are intended to be non-limiting.

(Example 1)

An unhydrogenated tetra-block copolymer (precursor polymer) was prepared by charging 800 lbs. of cyclohexane and 68 lbs. of 1,3-butadiene monomer to the reactor vessel. 0.10 lbs. of an approximately 12 wt.% solution of s-butyllithium in cyclohexane was added to initiate the polymerization. An additional 32 lbs. of 1,3-butadiene monomer was added at such a rate as to maintain the reaction temperature below 40°C. Following complete polymerization of 1,3-butadiene monomer, 125 lbs. of isoprene was added and allowed to polymerize, resulting in a butadiene-isoprene block chain (B-IP). Sequentially, 100 lbs. of 1,3-butadiene and 80 lbs. of isoprene were then added controllably to the system to make tetra-blocks of B-IP-B-IP with system temperature below 40°C. The polymerization reaction was then terminated by adding about 0.01 lbs. of methanol to ensure complete termination. The solution was contacted with carbon dioxide and water to neutralize the highly basic lithium species. Antioxidants (phenolic antioxidant and phosphite stabilizer) were added before the polymer was recovered by contacting with steam to residual water. The obtained polymer was then hydrogenated to obtain a MBPC-I. The polymer is pelletized before storage at ambient temperature.

(Example 2)

An unhydrogenated penta-block copolymer (precursor polymer) is prepared by charging 800 lbs. of cyclohexane and 68 lbs. of 1,3-butadiene monomer to the reactor vessel. 0.10 lbs. of approximately 12 wt.% solution of s-butyllithium in cyclohexane was added to initiate polymerization. An additional 32 lbs. of 1,3-butadiene monomer was added at such a rate as to maintain the reaction temperature below 40°C. Following complete polymerization of 1,3-butadiene monomer, 125 lbs. of isoprene was added and allowed to polymerize, resulting in a butadiene-isoprene block chain (B-IP). 50 lbs. of 1,3-butadiene was then added controllably to the system to make tri-blocks of B-IP-B with system temperature below 40°C. The polymerization reaction was then coupled with dimethyldimethoxylsilane (DMDMOS) before adding about 0.01 lbs. of methanol to ensure complete termination. The solution was contacted with carbon dioxide and water to neutralize the highly basic lithium species. Antioxidants (phenolic antioxidant and phosphite stabilizer) were added before the polymer was recovered by contact with steam to residual water. The obtained polymer was then hydrogenated to obtain a MBPC-II. The polymer is pelletized before storage at ambient temperature.

(Examples 3 - 12)

Melting point is determined according to ASTM F2625.
Melt strength is determined as described in ISO 16790.
PCR HDPE1 is a PCR high density polyethylene having a melt flow index (MFI) of 0.20 to 0.80 g/10 min at 190 °C, 16 kg (ASTM D1238), a modulus of elasticity of 2000-6000 MPa (ASTM D638), tensile yield strength of 8-25 mPa (ASTM D638), flow strength of 10-30 MPa (ASTM 638), specific deformation 30-80% (ASTM 638), traction force of 60-100 kgf (ASTM 638), and Shore D hardness of 55-65 (ASTM D2240).
PCR PPI is a PCR polypropylene having a melt flow of 16 g/10 min (ASTM 1238), specific gravity of 0.915 (ASTM D792), bulk density of 0.580 g/cm$^3$, flex modulus of 1200 MPa (23°C), tensile modulus of 1300 MPa (23°C), tensile yield strength of 27 MPa (23°C), tensile strain at break 40% (23°C), and Charpy Impact Strength of 6.0 kJ/m2 (23°C, Type 1, edgewise, notch A).
Polyolefin blends are prepared by dry blending MBPC, polyethylene (PP), and polypropylene in various amounts. Details of polyolefin blends are shown in table 1.

Table 1

| Components | Ex. 3 | Ex. 4 | Ex. 3 | Ex. 5 | Ex. 6 | Ex. 7 | Ex. 8 | Ex. 10 | Ex. 11 | Ex. 12 |
|---|---|---|---|---|---|---|---|---|---|---|
| MBPC-I | - | - | 0.5 | 2 | 5 | 10 | - | - | - | - |
| MBPC-II | - | - | - | - | - | - | 0.5 | 2 | 5 | 10 |
| PCR HDPE1 | 70 | 60 | 55 | 65 | 66 | 70 | 59.5 | 83 | 67 | 65 |
| PCR PP1 | 30 | 40 | 44.5 | 33 | 29 | 20 | 40 | 15 | 28 | 25 |

Polyolefin blends containing MBPCs are expected to show improved Notched Izod at 23°C and -20°C, suitable melt flow rate for processing, and enhanced flexural modulus of the blends as compared to blends (ex. 3 and 4) without the addition of MBPC.
Although the terms "comprising" and "including" have been used herein to describe various aspects, the terms "consisting essentially of" and "consisting of" can be used in place of "comprising" and "including" to provide for more specific aspects of the disclosure and are also disclosed.

**Claims**

1. A multi-block polyolefin copolymer represented by at least one formula selected from:

$$(A)_p(B)_q(C)_{r1}(B)_{q1}(A)_{p1} \qquad (1),$$

$$[(A)_p(B)_q(C)_{r1}]_n X \qquad (2),$$

$$(B)_q(B)_{q2}(B)_q \qquad (3),$$

$$[(B)_q(B)_{q2}(B)_q]_nX \qquad (4),$$

$$(A)_p(C)_r(A)_p \qquad (5),$$

and

$$[(A)_p(C)_r(A)_p]_nX \qquad (6),$$

wherein

p, q, q2 and r, each independently is greater than or equal to 1,
p1, q1 and r1, each independently is greater than or equal to 0,
n is ranging from 2 to 10, and
X is a residue of a coupling agent; and
wherein
each block A and C is a semicrystalline polymer block, same or different from each other, and independently derived from 1,3-butadiene monomer with 80 to 97 wt.% incorporation by 1,4 addition, based on weight of the polymerized 1,3-butadiene monomer in each block A and C; and
each block B is an amorphous polymer block derived from at least one monomer selected from isoprene monomer, 1,3-butadiene monomer with 21 to 85 wt.% incorporation by 1,2 addition, and mixtures thereof.

2. The multi-block polyolefin copolymer of claim 1, wherein the multi-block polyolefin copolymer has a molecular weight ($M_p$) of 15 to 200 kg/mol and a polydispersity index (PDI) of 1.0 to 3.

3. The multi-block polyolefin copolymer of claim 1, wherein the multi-block polyolefin copolymer has an entanglement molecular weight ($M_e$) of 15 to 200 kg/mol.

4. The multi-block polyolefin copolymer of any of claims 1-3, wherein the multi-block polyolefin copolymer is represented by a formula selected from $(A)_p(B)_q(C)_{r1}(B)_{q1}(A)_{p1}$ (1) and $[(A)_p(B)_q(C)_{r1}]_nX$ (2); and
wherein a weight ratio of the semicrystalline blocks A and C to the amorphous block B ranges from 1:4 to 4:1.

5. The multi-block polyolefin copolymer of any of claims 1-3, wherein the multi-block polyolefin copolymer is represented by a formula selected from $(A)_p(B)_q(C)_{r1}(B)_{q1}(A)_{p1}$ (1) and $[(A)_p(B)_q(C)_{r1}]_nX$ (2); and
wherein each block A and C comprises 1,3-butadiene monomer incorporated by 1,4 addition in an amount of 82 to 95 wt.%, based on weight of the polymerized 1,3-butadiene monomer in each block A and C.

6. The multi-block polyolefin copolymer of any of claims 1-3, wherein the multi-block polyolefin copolymer is represented by a formula selected from $(A)_p(B)_q(C)_{r1}(B)_{q1}(A)_{p1}$ (1) and $[(A)_p(B)_q(C)_{r1}]_nX$ (2); and
wherein each block A and C comprises 1,3-butadiene monomer incorporated by 1,2 addition in an amount of 3 to 20 wt.%, based on weight of the polymerized 1,3-butadiene monomer in each block A and C.

7. The multi-block polyolefin copolymer of any of claims 1-3, wherein the multi-block polyolefin copolymer is represented by a formula selected from $(A)_p(B)_q(C)_{r1}(B)_{q1}(A)_{p1}$ (1) and $[(A)_p(B)_q(C)_{r1}]_nX$ (2); and
wherein each block A and C independently has a vinyl content, before hydrogenation, of 5 to 15 mol%, based on mol of each block A and C.

8. The multi-block polyolefin copolymer of any of claims 1-3, wherein the multi-block polyolefin copolymer is represented by a formula selected from $(A)_p(B)_q(C)_{r1}(B)_{q1}(A)_{p1}$ (1) and $[(A)_p(B)_q(C)_{r1}]_nX$ (2); and
wherein each block A and C independently has a crystallinity of 20 to 70%, measured by differential scanning calorimetry (DSC), according to ASTM F2625.

9. The multi-block polyolefin copolymer of any of claims 1-3, wherein the multi-block polyolefin copolymer is represented by a formula selected from $(A)_p(B)_q(C)_{r1}(B)_{q1}(A)_{p1}$ (1) and $[(A)_p(B)_q(C)_{r1}]_nX$ (2); and
wherein the block A constitutes from 35 to 60 wt.%, the block B constitutes from 35 to 60 wt.%, and the block C constitutes from 5 to 30 wt.%, based on total weight of the multi-block polyolefin copolymer.

10. The multi-block polyolefin copolymer of any of claims 1-3, wherein the multi-block polyolefin copolymer is represented by at least one formula selected from:

$$(A)_p(B)_q(C)_{r1}(B)_{q1}(A)_{p1} \qquad (1),$$

$$[(A)_p(B)_q(C)_{r1}]_nX \qquad (2),$$

$$(B)_q(B)_{q2}(B)_q \qquad (3),$$

and

$$[(B)_q(B)_{q2}(B)_q]_nX \qquad (4);$$

and

wherein the block B comprises 1,3-butadiene monomer incorporated by 1,4 addition in an amount of 15 to 79 wt.%, based on total weight of the polymerized 1,3-butadiene monomer in the block B; or
wherein the block B comprises isoprene monomer incorporated by 1,4 addition in an amount of 80 to 97 wt.%, based on total weight of the polymerized isoprene monomer in the block B.

11. The multi-block polyolefin copolymer of any of claims 1-3, wherein the multi-block polyolefin copolymer represented by at least one formula selected from:

$$(A)_p(B)_q(C)_{r1}(B)_{q1}(A)_{p1} \qquad (1),$$

$$[(A)_p(B)_q(C)_{r1}]_nX \qquad (2),$$

$$(B)_q(B)_{q2}(B)_q \qquad (3),$$

and

$$[(B)_q(B)_{q2}(B)_q]_nX \qquad (4);$$

and wherein the block B has a vinyl content, before hydrogenation, of 60 to 80 mol%, based on total mol of the block B.

12. The multi-block polyolefin copolymer of any of claims 1-3, wherein the multi-block polyolefin copolymer represented by at least one formula selected from:

$$(A)_p(B)_q(C)_{r1}(B)_{q1}(A)_{p1} \qquad (1),$$

$$[(A)_p(B)_q(C)_{r1}]_nX \qquad (2),$$

$$(B)_q(B)_{q2}(B)_q \qquad (3),$$

and

$$[(B)_q(B)_{q2}(B)_q]_nX \qquad (4);$$

and wherein the block B comprises isoprene monomer incorporated by 3,4 addition in an amount of 3 to 20 wt.%, based on total weight of the polymerized isoprene monomer in the block B.

13. The multi-block polyolefin copolymer of any of claims 1-3, wherein the multi-block polyolefin copolymer represented by a formula selected from: $(A)_p(C)_r(A)_p$ (5), and $[(A)_p(C)_r(A)_p]_nX$ (6); and
wherein a weight ratio of the block A to the block C ranges from 5:95 to 95:5.

14. A polyolefin blend comprising, based on total weight of the polyolefin blend:

(a) 40 to 98.8 wt.% a virgin and / or a post-consumer recycle (PCR) polyethylene;

(b) 1 to 40 wt.% a virgin and / or a post-consumer recycle (PCR) polypropylene; and

(c) 0.2 to 20 wt.% the multi-block polyolefin copolymer of any of claims 1-3.

15. The polyolefin blend of claim 14, wherein polyethylene is selected from the group consisting of low density polyethylene (LDPE), linear low density polyethylene (LLDPE), very low density polyethylene (VLDPE), high density polyethylene (HDPE), medium density polyethylene (MDPE), high molecular weight polyethylene (HMWPE), and ultra-high molecular weight polyethylene (UHMWPE), and mixtures thereof; and wherein polypropylene comprises a blend of polypropylene with a random ethylene and / or butene copolymer, or a crystalline random copolymer of ethylene-propylene with a rubbery copolymer of ethylene-propylene, or a copolymer of propylene and a comonomer; wherein the comonomer is selected from the group consisting of ethylene, 1-butene, 1-pentene, 1-hexene, 1-octene, and mixtures thereof.